# EUROPEAN PATENT APPLICATION

(11) **EP 4 386 971 A1**
(43) Date of publication of application: **19.06.2024**
(21) Application number: 23839922.4
(22) Date of filing: 11.07.2023
(51) Int. Cl.: H01M 50/553, H01M 50/103, H01M 50/15, H01M 50/176, H01M 50/566, H01M 50/59, H01M 50/342

(54) **SECONDARY BATTERY HAVING IMPROVED TERMINAL STRUCTURE**

(30) Priority: 11.07.2022 KR 20220085249
(71) Applicant: LG Energy Solution, Ltd., Seoul 07335 (KR)
(72) Inventor: KO, Young Jun, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/009832
(87) International publication number: WO 2024/014830

(57) **Abstract**

Disclosed herein relates to a secondary battery, including: a cell case including a cap plate, wherein the cell case has a hexahedral shape and accommodates an electrode assembly; a positive terminal and a negative terminal spaced apart from each other and disposed on a top surface of the cell case; a terminal structure comprising a terminal body coupled to the top surface of the cell case and one or more surfaces extending from the top surface while covering the positive or negative terminal, and an extension terminal electrically connected to the positive or negative terminal and exposed on any one surface of the terminal body except the top surface; and an extension wire electrically connecting the extension terminal to the positive or negative terminal and forming a joint part with the positive or negative terminal, the joint part being insulated from outside of the secondary battery.

## Description

### [Technical Field]

The present disclosure relates to a secondary battery, and more specifically, to a prismatic secondary battery with an improved terminal structure that allows for easy changes in the arrangement of the positive terminal and/or the negative terminal.

### [Background]

Unlike primary batteries, secondary batteries are rechargeable and have been extensively researched and developed recently due to potential for miniaturization and high capacity applications. With the increasing technological advancements and demand for mobile devices, as well as the growing prominence of electric vehicles and energy storage systems in response to environmental concerns, the demand for secondary batteries as an energy source is rapidly and significantly increasing.

Depending on the shape of the cell case, secondary batteries are classified into coin-type batteries, cylindrical batteries, prismatic batteries, and pouch-type batteries. The electrode assembly, which is installed inside the cell case in secondary batteries, is a power generation element capable of charge and discharge. It has a laminated structure of electrodes and separators.

Electrode assemblies can be broadly categorized into: a Jellyroll type, which involves winding a positive electrode and a negative electrode of an active material-coated sheet with a separator interposed therebetween; a stack-type, where a plurality of positive electrodes and negative electrodes are sequentially stacked with a separator interposed therebetween; and a Stack & Folding type, where stack-type unit cells are wound with a long separator film.

When examining prismatic secondary batteries among various types of secondary batteries, the positive and negative terminals are typically either disposed together on one side or disposed on opposing sides. The disposition of these terminals is determined by the design specifications of the devices in which the prismatic secondary battery is installed. To meet these design specifications, the disposition structures of the positive terminal and negative electrode should be designed separately, even in the same form factor.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

### [Technical Problem]

The present disclosure is to provide a new prismatic secondary battery that allows for an easy change in the arrangement of the positive and negative terminals without the need for separate design modifications.

However, the technical problems to be solved by the present disclosure are not limited to the above-described problem, and other problems not mentioned can be clearly understood by those skilled in the art from the following description of the present disclosure.

### [Technical Solution]

In one embodiment according to the present disclosure, the secondary battery includes: a cell case including a cap plate, wherein the cell case has a hexahedral shape and accommodates an electrode assembly; a positive terminal and a negative terminal spaced apart from each other and disposed on a top surface of the cell case; a terminal structure including a terminal body coupled to the top surface of the cell case and one or more surfaces extending from the top surface while covering the positive or negative terminal and an extension terminal electrically connected to the positive or negative terminal and exposed on any one surface of the terminal body except the top surface; and an extension wire electrically connecting the extension terminal to the positive or negative terminal and forming a joint part with the positive or negative terminal, the joint part being insulated from outside of the secondary battery.

In one exemplary embodiment of the present disclosure, the joint part may be formed by welding.

In addition, an adhesive layer may be formed on at least one surface of the cell case in contact with the terminal body.

The adhesive layer may be formed by at least one of double-sided adhesive tape, solid adhesive, liquid adhesive, or curable thermal resin.

Furthermore, the adhesive layer may strengthen at least one of a heat dissipation or a vibration resistance between the terminal structure and the cell case.

Additionally, the joint part may be insulated by at least one of an insulating cover, an insulating tape, or a curable insulating layer.

According to a specific embodiment of the present disclosure, the terminal body is coupled to the top surface of the cell case and one side surface extending from the top surface, and the extension terminal may be exposed on the one side surface.

Moreover, the secondary battery may comprise a pair of the terminal structures, each may be coupled to the positive terminal and the negative terminal, respectively.

Here, the extension terminals of the terminal structures coupled to the positive and negative terminals, respectively, may have the same or different upward and downward positions with respect to the cell case.

Meanwhile, in an exemplary embodiment of the present disclosure, a venting part may be provided on one surface of the cell case, and the extension terminal on the terminal structure may be provided on a surface other than the surface provided with the venting part.

In a specific example, the venting part may be provided on the top surface of the cell case, positioned between the positive and negative terminals.

In addition, the secondary battery comprises a pair of the terminal structures, each may be coupled to the positive terminal and the negative terminal, respectively, and the extension terminal of one of the terminal structures may be exposed on one side surface of the cell case.

### [Advantageous Effects]

In the secondary battery of the present disclosure with the above configuration, the arrangement structure of the positive and/or negative terminals can be easily changed by simply coupling the terminal structure to a corner part of the top surface of the secondary battery. Therefore, the development period and production cost of prismatic secondary batteries are reduced because the position of the terminals can be changed freely without affecting the existing internal cell manufacturing process.

In addition, the freedom to design the location of the terminals not only reduces the development and production costs of battery cells, but also gives freedom to the design of busbars, etc. when manufacturing battery modules/packs.

In addition, if the venting part is placed on the same side as the side where the positive and negative terminals are placed, the positive and negative terminals as well as the surrounding secondary battery and electrical equipment are damaged by the gas or flame that is ejected when the venting part ruptures, but the secondary battery of the present disclosure can separate the positive and negative terminals from the venting part by using the terminal structure, and therefore, high safety can be secured without installing a separate gas emission inducer or a barrier.

However, advantageous effects of the present technology are not limited to those mentioned above, and other effects not mentioned will be apparent to one of ordinary skill in the art from the following description of the invention.

### [Brief Description of the Drawings]

The following drawings accompanying this specification illustrate preferred exemplary embodiments of the present disclosure and are intended to serve as a further understanding of the technical ideas of the present disclosure in conjunction with the detailed description of the invention that follows, so the present disclosure is not to be construed as limited to what is shown in such drawings.
FIG. 1 is a perspective view showing a secondary battery according to the present disclosure.
FIG. 2 is a perspective view showing a coupling structure of a secondary battery and a terminal structure according to the present disclosure.
FIG. 3 is a drawing illustrating an example of forming an adhesive layer between a terminal structure and a case.
FIG. 4 is a cross-sectional view showing an adhesive layer formed between a terminal structure and a case.
FIG. 5 is a drawing illustrating an exemplary embodiment in which top and bottom positions of an extension terminal are different.
FIG. 6 is a drawing showing a secondary battery according to another exemplary embodiment of the present disclosure.

### [Detailed Description]

The present disclosure may have various modifications and various examples, and specific examples are illustrated in the drawings and described in detail in the description.

However, it should be understood that the present disclosure is not limited to specific embodiments, and includes all modifications, equivalents or alternatives within the spirit and technical scope of the present disclosure.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present disclosure relates to a secondary battery, especially a secondary battery in which the positive and negative terminals are spaced apart on the top surface of a cell case that forms a hexahedral shape.

In one example, the secondary battery according to the present disclosure, has a terminal structure coupled to at least one corner of the top surface of the cell case. The terminal structure includes a terminal body coupled to the top surface of the cell case and one or more surfaces extending from the top surface while enclosing the positive or negative terminal so that it is not exposed, and an extension terminal electrically connected to the positive or negative terminal and exposed on any one surface of the terminal body except the top surface.

Here, according to an exemplary embodiment of the present disclosure, an extension wire electrically connecting the extension terminal to the positive or negative terminal forms a joint part with the positive or negative terminal, the joint part being insulated from the outside.

As such, a secondary battery including a terminal structure can freely change the positions of the positive and negative terminals arranged on the top surface of the cell case to suit the needs of the user without any design changes by simply applying the terminal structure, thereby eliminating the need to redesign the prismatic secondary battery of a new specification, thereby reducing the production cost of the prismatic secondary battery.

### [Mode for Invention]

Hereinafter, a detailed description will be given of specific embodiments of the secondary battery of the present disclosure with reference to the attached drawings. For reference, the relative positions specified in the directions of front and back, up and down, and left and right used in the following description are intended to aid in understanding the invention, and unless specially defined, are based on the directions shown in the drawings.

### (First embodiment)

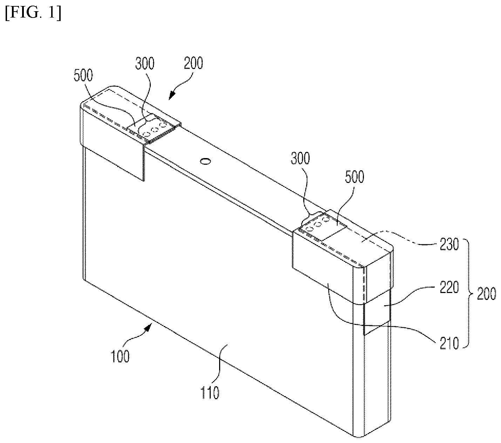

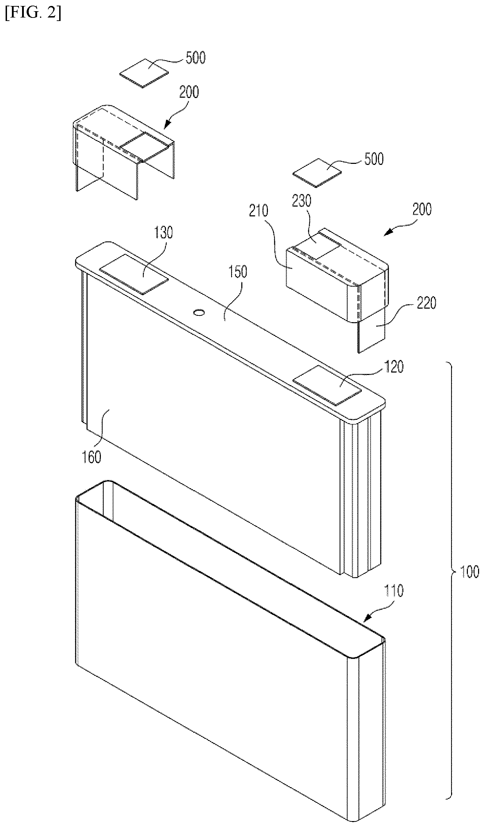

FIG. 1 is a perspective view of a secondary battery 100 according to the present disclosure, and FIG. 2 is a perspective view of a coupling structure of a secondary battery 100 and a terminal structure 200 according to the present disclosure.

Referring to FIGS. 1 and 2, the present disclosure relates to a secondary battery 100, and in particular to a unidirectional prismatic secondary battery 100 having a positive terminal 120 and a negative terminal 130 spaced apart on a top surface of a cell case 110 forming a hexahedral shape. Here, the prismatic secondary battery 100 shown in the drawings is an example, and the ratio of width to length and height may vary, and for convenience of explanation, the directions of front and rear and up and down and left and right will be referred with reference to the attached drawings. For example, one surface of the cell case 110 on which the positive terminal 120 and the negative terminal 130 are disposed is called the top surface, and the opposite side facing it is called the bottom surface.

The secondary battery 100 of the present disclosure includes a terminal structure 200. The terminal structure 200 is a hinge-like structure that couples to at least one top corner of the cell case 110, and includes a terminal body 210 and an extension terminal 220.

The terminal body 210 refers to a body of the terminal structure 200 that wraps around the positive terminal 120 or the negative terminal 130 such that it is not exposed, and couples to a top surface of the cell case 110 and one or more surfaces (such as side, front, rear, etc.) extending from the top surface. While the drawings show an example of the terminal structure 200 coupling to both the positive terminal 120 and the negative terminal 130, depending on the embodiment, the terminal structure 200 may couple to only one of the positive terminal 120 and the negative terminal 130.

The extension terminal 220 is a connection terminal that is electrically connected to the positive terminal 120 or the negative terminal 130 and is exposed on any surface of the terminal body 210 other than the top surface of the cell case 110. In other words, the positive terminal 120 or negative terminal 130 is covered by the terminal body 210 and is not exposed, so the extension terminal 220 functions as a new positive terminal 120 or negative terminal 130 located on a surface other than the top surface of the cell case 110.

As such, the secondary battery 100 of the present disclosure including the terminal structure 200 can freely change the positions of the positive terminal 120 and the negative terminal 130, which are disposed together on the top surface of the cell case 110, without any design changes by simply applying the terminal structure 200. Accordingly, the present disclosure can easily change the position of the positive terminal 120 and the negative terminal 130 by adding the terminal structure 200 to the prismatic secondary battery 100 of the same form factor, thereby reducing the production cost of various types of prismatic secondary batteries.

In an exemplary embodiment of the present disclosure, the positive terminal 120 or negative terminal 130 is electrically connected to the extension terminal 220 via an extension wire 230, wherein the extension wire 230 connected to the extension terminal 220 forms a joint part 300 with respect to the positive terminal 120 or negative terminal 130, wherein the joint part 300 provides a mechanically and electrically robust connection between the extension wire 230 and the positive terminal 120 or negative terminal 130. For example, the joint part 300 may be formed by welding.

The extension wire 230 is not exposed outside of the terminal body 210. For example, the extension wire 230 may be embedded in the terminal body 210 of an insulating resin material, such as by insert molding. In addition, the junction 300 is also insulated from the outside. The external insulation of the joint part 300 may be provided by at least one of an insulating cover, an insulating tape, and a curable insulating layer. Here, a curable insulating layer refers to an insulating layer formed by curing after a flowable insulating resin is applied to the joint part 300, and in FIGS. 1 and 2, a configuration in which a film-type insulating tape 500 having an adhesive layer 400 insulates the joint part 300 is shown.

In this way, the extension wire 230 and the joint part 300 are insulated from the outside, and only the extension terminals 220 are exposed, which prevents problems such as damage to the extension wires 230 or shorting.

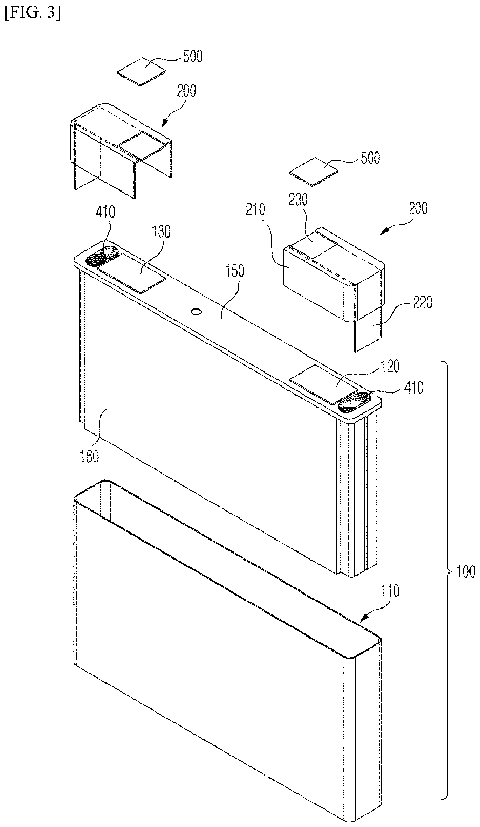

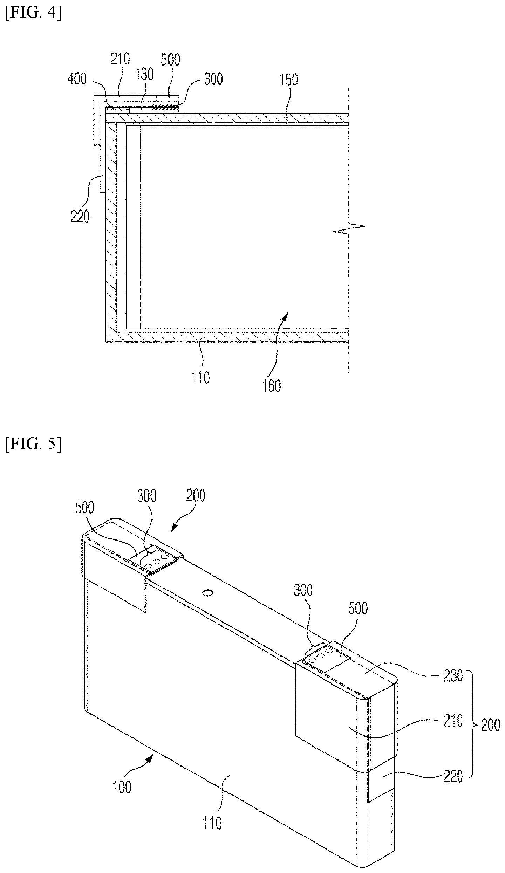

Furthermore, the secondary battery 100 of the present disclosure may have an adhesive layer 400 formed on at least one side of the cell case 110 in contact with the terminal body 210. That is, the adhesive layer 400 may be formed on all or part of the contact surface between the terminal body 210 of the terminal structure 200 and the case 110. FIG. 3 is a drawing illustrating one example of forming the adhesive layer 400 between the terminal structure 200 and the case 110, and FIG. 4 is a cross-sectional view illustrating the adhesive layer 400 formed between the terminal structure 200 and the case 110.

Essentially, the terminal structure 200 is fixed to the positive terminal 120 or the negative terminal 130 by the joint part 300, but with the additional inclusion of the adhesive layer 400, the fixation of the terminal structure 200 is made more robust, thereby improving the vibration resistance of the terminal structure 200 that is attached to the cell case 110.

The adhesive layer 400 may be formed by at least one of a double-sided adhesive tape, a solid or liquid adhesive, or a curable thermal resin, depending on the embodiment. FIG. 3 illustrates an example of coupling the terminal structure 200 after applying a liquid adhesive 410 to a corner part of the cap plate 150.

In addition to strengthening the vibration resistance between the terminal structure 200 and the cell case 110, the adhesive layer 400 can also improve heat dissipation. That is, the adhesive layer 400 can be given heat conduction properties by making the base material of the double-sided adhesive tape a thermally conductive material, or by adding a thermally conductive material to the adhesive and resin. By improving the heat dissipation performance through the terminal structure 200, it is possible to suppress the temperature of the secondary battery 100 from rising or overheating locally.

Meanwhile, referring to the specific embodiment shown, the terminal body 210 is coupled to the top surface of the cell case 110 and a side surface extending from the top surface, and the extension terminal 220 is exposed on the side surface of the cell case 110. Accordingly, the position of the positive terminal 120 or the negative terminal 130, which was located on the top surface of the cell case 110, has been moved to the side.

In addition, the terminal structure 200 may be coupled to the positive terminal 120 and the negative terminal 130, respectively, such that the positive terminal 120 and the negative terminal 130 are disposed separately, one by one, on sides opposite to each other. In other words, the positive terminal 120 and the negative terminal 130, which were disposed together on the top surface of the cell case 110, are moved to adjacent sides, respectively, and the initial prismatic secondary battery designed as a unidirectional secondary battery is changed to a bidirectional secondary battery.

And, as shown in FIG. 5, the extension terminals 220 of the terminal structure 200 coupled to the positive terminal 120 and the negative terminal 130, respectively, may have different upper and lower positions, that is, different heights on the sides. In other words, the extension terminals 220 on the left and right sides may be designed to be asymmetrical, and in this way, the secondary battery 100 of the present disclosure can freely and variously change the arrangement structure of the positive terminal 120 and the negative terminal 130 by applying the terminal structure 200.

Additionally, the terminal structure 200 may be further attached to the completed secondary battery 100, or may be manufactured in a variety of ways, such as by first coupling the terminal structure 200 to the cap plate 150 that constitutes the top surface of the cell case 110 after coupling the electrode assembly 160 and before enclosing it in the cell case 110.

In addition, while the illustrated embodiment is intended for a stack-type electrode assembly 160, it is not limited thereto and may be applied to prismatic secondary batteries that accommodate electrode assemblies of various shapes, such as jelly roll type electrode assemblies.

### (Second Embodiment)

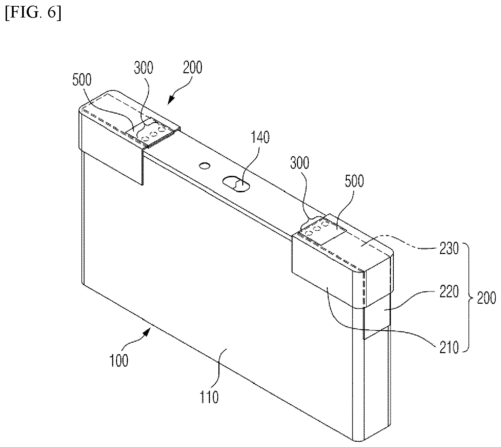

FIG. 6 is a diagram illustrating the secondary battery 100 according to another exemplary embodiment of the present disclosure. The second embodiment of FIG. 6 includes the configuration of the first embodiment described above, but is described mainly in terms of the configuration of the terminal structure 200 considering the arrangement structure of the venting part 140.

The venting part 140 is configured to rupture and release gas if the internal pressure of the secondary battery 100 increases above a certain level, and it corresponds to a safety device to prevent an explosion of the secondary battery 100. For example, the venting part 140 may be configured by forming a notch thinner than the surrounding thickness on the surface of the cell case 110 or by separately making and attaching it, and the like.

In the secondary battery 100 shown in FIG. 6, a venting part 140 is located on the top surface of the cell case 110 where the positive terminal 120 and the negative terminal 130 are located together, particularly between the positive terminal 120 and the negative terminal 130. In this case, if the venting part 140 breaks and the internal gas is released, the positive terminal 120 and the negative terminal 130 are left exposed to damage such as corrosion and ignition.

The terminal structure 200 provided in the present disclosure also contributes to preventing damage to the electrode terminals 120, 130 due to gas eruption and flame propagation by spatially separating the positive and negative terminals 120 and 130 with respect to the venting part 140, i.e., disposing them on different sides.

In the illustrated embodiment, a venting part 140 is provided on a top surface of the cell case 110, and an extension terminal 220 on the terminal structure 200 is provided on a surface other than the surface on which the venting part 140 is provided, such as a side surface. In other words, the venting part 140 and the electrode terminals 120, 130 are physically separated from each other by the terminal structure 200, thereby improving the safety of the secondary battery 100.

The present disclosure has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may replace them at the time of filing the present application.

### [Reference numerals]

100: SECONDARY BATTERY
110: CELL CASE
120: POSITIVE TERMINAL
130: NEGATIVE TERMINAL
140: VENTING PART
150: CAP PLATE
160: ELECTRODE ASSEMBLY
200: TERMINAL STRUCTURE
210: TERMINAL BODY
220: EXTENSION TERMINAL
230: EXTENSION WIRE
300: JOINT PART
400: ADHESIVE LAYER
410: ADHESIVE
500: INSULATING TAPE

## Claims

1. A secondary battery, comprising:
a cell case including a cap plate, wherein the cell case has a hexahedral shape and accommodates an electrode assembly;
a positive terminal and a negative terminal spaced apart from each other and disposed on a top surface of the cell case;
a terminal structure comprising a terminal body coupled to the top surface of the cell case and one or more surfaces extending from the top surface while covering the positive or negative terminal and an extension terminal electrically connected to the positive or negative terminal and exposed on any one surface of the terminal body except the top surface; and
an extension wire electrically connecting the extension terminal to the positive or negative terminal and forming a joint part with the positive or negative terminal, the joint part being insulated from outside of the secondary battery.

2. The secondary battery of claim 1, wherein the joint part is formed by welding.

3. The secondary battery of claim 1, wherein an adhesive layer is formed on at least one surface of the cell case in contact with the terminal body.

4. The secondary battery of claim 3, wherein the adhesive layer is formed by at least one of double-sided adhesive tape, solid adhesive, liquid adhesive, or curable thermal resin.

5. The secondary battery of claim 4, wherein the adhesive layer strengthens at least one of a heat dissipation or a vibration resistance between the terminal structure and the cell case.

6. The secondary battery of claim 1, wherein the joint part is insulated by at least one of an insulating cover, an insulating tape, or a curable insulating layer.

7. The secondary battery of claim 1, wherein:
the terminal body is coupled to the top surface of the cell case and one side surface extending from the top surface, and
the extension terminal is exposed on the one side surface.

8. The secondary battery of claim 7, wherein the secondary battery comprises a pair of the terminal structures, each is coupled to the positive terminal and the negative terminal, respectively.

9. The secondary battery of claim 8, wherein the extension terminals of the terminal structures coupled to the positive and negative terminals, respectively, have the same or different upward and downward positions with respect to the cell case.

10. The secondary battery of claim 1, wherein:
a venting part is provided on one surface of the cell case, and
the extension terminal on the terminal structure is provided on a surface other than the surface provided with the venting part.

11. The secondary battery of claim 10, wherein the venting part is provided on the top surface of the cell case, positioned between the positive and negative terminals.

12. The secondary battery of claim 11, wherein:
the secondary battery comprises a pair of the terminal structures, each is coupled to the positive terminal and the negative terminal, respectively, and
the extension terminal of one of the terminal structures is exposed on one side surface of the cell case.
